# EUROPEAN PATENT SPECIFICATION

(11) **EP 4 241 957 B1**
(45) Date of publication and mention of the grant of the patent: **19.02.2025**
(21) Application number: 22161050.4
(22) Date of filing: 09.03.2022
(51) Int. Cl.: B29C 44/44, B29C 44/58, B29C 45/37, B29C 45/56, B29C 44/04, B29C 44/34

(54) **METHOD FOR MANUFACTURING A PLASTIC COMPONENT FROM AN EXPANDABLE OR EXPANDED POLYMER BEAD MATERIAL**
VERFAHREN ZUR HERSTELLUNG EINER KUNSTSTOFFKOMPONENTE AUS EINEM EXPANDIERBAREN ODER EXPANDIERTEN POLYMEREN PERLENMATERIAL
PROCÉDÉ DE FABRICATION D'UN COMPOSANT EN MATIÈRE PLASTIQUE À PARTIR D'UN MATÉRIAU DE BILLES DE POLYMÈRE EXPANSIBLE OU EXPANSÉ

(43) Date of publication of application: 13.09.2023
(73) Proprietor: JSP International SARL, 60190 Estrées-Saint-Denis (FR)
(72) Inventor: Kendall, Justin, 60190 Estrees St. Denis (FR); Suffis, Bert, 60190 Estrees St. Denis (FR)
(74) Representative: Hafner & Kohl PartmbB

(56) References cited:
- WO-A1-2016/023067
- WO-A1-2018/112506
- WO-A1-2021/178523
- GB-A- 1 176 813
- JP-A- S51 132 279

## Description

The invention relates to a method for manufacturing a plastic component from an expandable or expanded polymer bead material, the plastic component comprising at least one hinge portion, the method comprising filling an expandable or expanded polymer bead material in cavity of a molding tool and performing at least one measure to fuse the expandable polymer bead material.

Respective methods for manufacturing light-weight plastic components comprising at least one hinge portion which enables that, by moving respective sections of the plastic component connected via the at least one hinge portion about a hinge axis of the at least one hinge portion, the respective plastic component can be transferred from a first state in a second state and vice versa are generally known in the field of processing expandable or expanded polymer bead materials.

It can be challenging to manufacture respective plastic components with good quality. This particularly, applies to the creation of respective hinge portions which are typically created by moving a movable tool element, such as an anvil, into an already fused portion of a respective plastic component such that the hinge portion is only created after fusing of the bead material has been completed.

Even though known methods are generally suitable for producing respective plastic components comprising at least one hinge portion with acceptable quality, there exists a need for further improving respective methods, particularly regarding the efficiency of the manufacturing process and/or component quality.

This particularly, applies when expandable or expanded polymer bead material showing a highly resilient behavior are to be processed for manufacturing a respective plastic component because the resilient behavior typically, impedes creating hinge portions of good quality due to the tendency of the material to return to its original state.

GB 1 176 813 discloses principles of molding foamed articles with integral hinges.

WO 2021/178523 A1 discloses foam structures having living hinges and methods of making those structures.

WO 2018/112506 A1 discloses a mold for forming a collapsible container from an expandable material.

It is therefore, an object of the invention to provide an improved method for manufacturing a plastic component from an expandable or expanded polymer bead material, the plastic component comprising at least one hinge portion.

The object is achieved by a method for manufacturing a plastic component from an expandable or expanded polymer bead material according to independent Claim 1. The Claims depending on independent Claim 1 relate to exemplary embodiments of the method according to independent Claim 1.

The invention is defined by the subject-matter of the appended Claims which are to be construed in accordance with the Description and Drawings.

A first aspect of the invention relates to a method for manufacturing a plastic component from an expandable or expanded polymer bead material, wherein the plastic component comprises at least one hinge portion. The method thus, generally pertains to the manufacture of at least one plastic component from an expandable or expanded polymer bead material, wherein the at least one plastic component comprises at least one hinge portion.

The plastic component is thus, via the at least one hinge portion which typically defines a hinge axis, transferrable between a first state and a second state or vice versa. In a respective first state, at least one section of the plastic component can be in a first spatial orientation and/or position relative to at least one further section of the plastic component. In a respective second state, the at least one section of the plastic component can be in a second orientation and/or position relative to the at least one further section of the plastic component. Respective transfers of the plastic component between respective first and second states are typically reversible and can be performed multiple times without compromising the structural properties of the at least one hinge portion.

The at least one hinge portion can be built by or comprise region of reduced cross-section of the plastic component. A respective region of reduced cross-section can e.g. have a cross-section of e.g. 95%, 90%, 85%, 80%, 75%, 70%, 65%, 60%, 55%, 50%, 45%, 40%, 35%, 30%, 25%, 20%, 15%, 10%, 5%, 4%, 3%, 2%, 1% (all values could also be deemed as upper or lower threshold values of ranges) of a nominal or reference cross-section of a region of the plastic component which does not comprise a hinge portion. Particularly, the at least one hinge portion can be built by a region of reduced cross-section of a base section of the plastic component. A respective base section of the plastic component can e.g. have a plate-like or plate-shape. Plate-like or plate-shapes comprise generally not only plane base shapes but can also comprise curved or inclined base shapes.

The plastic component is typically a monolithic component which means that the plastic component is monolithically made from the respective expandable or expanded polymer bead material processed. In other words, all regions of the plastic component including regions comprising the at least one hinge portion are typically made from the expandable or expanded polymer bead material which has been processed in the method. As such, the at least one hinge portion is typically built as a or comprises a film hinge.

In either case, the plastic component can comprise one or more functional and/or structural element, such as one- or multidimensional reinforcing element, particularly reinforcing inserts, nets, etc. Respective functional and/or structural elements can be provided with or close to the hinge portion to improve the structural properties.

The material processable or processed with the method is or comprises an expandable or expanded polymer bead material. The expandable or expanded material typically has a cellular or foamed (micro)structure. The term "expandable" indicates that the material can undergo an expansion when being processed in the method. A respective expansion of the material is typically related with an increase in volume when being processed in the method. The term "expanded" indicates that the material already has undergone a certain expansion before being processed in the method. Yet, it is possible that also a respective expanded material can undergo a (further) expansion when being processed in the method. A respective further expansion of the material is typically related with a further increase in volume when being processed in the method. The term "bead" indicates the loose bead-, granulate- or pellet-like structure of the material before fusing.

Non-limiting examples of expandable or expanded polymer bead materials which can be processed in the method are expandable or expanded polyester-based bead materials, such as expanded or expandable polycarbonate-based materials (EPC), expanded or expandable polyethylene-terephthalate-based materials (EPET), expanded or expandable polylactic-acid-based materials (EPLA), expandable or expanded polyolefin-based bead materials (EPO-materials), such as expandable or expanded polyethylene-based bead materials (EPE-materials) and/or expandable or expanded polypropylene-based bead materials (EPP-materials), expandable or expanded polyamide-based bead materials (EPA-materials), or expandable or expanded polyurethane-based bead materials (ETPU-materials).

In either case, the term "expandable or expanded polymer bead material" can generally comprise expandable or expanded co-polymer bead materials. Also, the term "expandable or expanded polymer bead material" can generally comprise at least two expandable or expanded polymer bead materials differing in at least one chemical and/or physical property. The material which is processed in the method is thus, not a conventional compact polymer material as used e.g. in injection molding or extrusion.

The essential steps of the method are specified in the following:
The method comprises step a) which comprises filling an expandable or expanded polymer bead material in a cavity of a molding tool. Step a) can be performed via a filling device configured for filling an expandable or expanded polymer bead material in a cavity of a molding tool. A respective filling device can be or comprise a filling stream generating device configured to generate a filling stream, such as a filling fluid stream, e.g. a filling gas stream, with which the expandable or expanded polymer bead material can be filled into the cavity of a respective molding tool. A respective molding tool typically comprises at least two molding tool parts each comprising one or more shaping contour surfaces which, at least in a closed state of the molding tool, define the cavity of the molding tool which is shaped to substantially define the plastic component to be manufactured. A respective closed state of the molding tool can be accomplished by moving at least one molding tool part relative to another molding tool part. In like manner, a respective open state of the molding tool can be accomplished by moving at least one molding tool part relative to another molding tool part. The molding tool used for carrying out the method thus, typically comprises at least one molding tool part which is movable supported relative to one or more other molding tool parts so as to transfer the molding tool from an open state in a closed state and vice versa.

The method further comprises step b) which comprises performing at least one measure to fuse the expandable or expanded polymer bead material filled in the cavity. Fusing of the expandable or expanded polymer bead material therefore, results in combining the plurality of polymer beads to form the actual plastic component to be manufactured. Fusing of the expandable or expanded polymer bead material typically occurs at a temperature level, typically a material-specific temperature level, below the glass transition temperature (typically for amorphous polymer materials) or below the melting temperature (typically for at least partly crystalline materials) of the expandable or expanded polymer bead material. Hence, the expandable or expanded polymer bead material will not be transferred in a fully melted state before, during, and after fusing. The fusing temperature of the expandable or expanded polymer bead material is thus, typically below a glass transition temperature or a melting temperature, respectively of the expandable or expanded polymer bead material so as to avoid that the expandable or expanded polymer bead material, i.e. particularly the actual polymer beads, is/are transferred in a fully melted state. Yet, the fusing temperature of the expandable or expanded polymer bead material can be below, at or (slightly) above a softening temperature, particularly even close or at least for a certain period of time close to, at or above the glass transition temperature or the melting temperature, respectively of the expandable or expanded polymer bead material. As such, the surface of the expandable or expanded polymer bead material can be softened and/or melted during fusing which can facilitate fusing of the polymer beads to form the plastic component.

Fusing of the expandable or expanded polymer bead material can comprise introducing at least one process fluid, particularly a heated process fluid, or a fusing stream comprising a respective process fluid into the cavity of the molding tool. A respective process fluid can be steam, for instance. Step b) can thus, be performed via a fusing device configured for fusing expandable or expanded polymer bead material in the cavity of the molding tool. A respective fusing device can be or comprise a fusing stream generating device configured to generate a respective fusing stream, such as a steam stream, with which the expandable or expanded polymer bead material can be fused in the cavity of the molding tool. A respective fusing stream can be introduced into the cavity via a plurality of, e.g. nozzle- or slit-like openings, provided with a respective shaping contour surface one or more molding tool parts.

Hence, step b) can comprise that at least one process fluid is, if need be pressurized, introduced into the cavity of the molding tool through at least one inlet opening of at least one molding tool part, wherein the at least one inlet opening is open because a streaming control element, such as a valve element, assigned to the at least one inlet opening is in its open state. Further, in step b), possible one or more outlet openings provided with the or at least one molding tool part can be opened or closed via an assigned streaming control element such the at least one process fluid can flow through the cavity and exit the cavity via the at least one outlet opening when the respective streaming control element assigned to the at least one outlet opening is in its opened state, e.g. when fusing is implemented as cross-steaming, or the at least one process fluid can (only) flow within the cavity without exiting the cavity via the at least one outlet opening when respective streaming control element assigned to the at least one outlet opening is in its closed state, e.g. when fusing is implement as autoclave-steaming. Hence, step b) can comprise cross-steaming or autoclave-steaming, for instance. Operation of respective streaming control elements, to transfer them in respective open and/or closed states, can be controlled on basis of data, such as sensor data, particularly sensor data derived from sensors provided with the molding tool.

Alternatively or additionally, fusing of the expandable or expanded polymer bead material in step b) can comprise introducing electromagnetic radiation, such as e.g. infrared-waves, micro-waves, radiofrequency-waves, into the cavity of the molding tool. Step b) can thus, be performed via a radiation device configured for fusing expandable or expanded polymer bead material in the cavity of the molding tool. A respective radiation device can be or comprise a radiation generating device configured to generate respective electromagnetic radiation with which the expandable or expanded polymer bead material can be fused in the cavity of the molding tool.

The method comprises creating of the at least one hinge portion during step b). As such, the at least one hinge portion is created during performing the at least one measure to fuse the expandable or expanded polymer bead material and thus, during fusing of the expandable or expanded polymer bead material. Hence, the method comprises creating the at least one hinge portion while the expandable or expanded polymer bead material is being fused. This means that creating of the at least one hinge portion starts earliest with the start of performing the at least one measure to fuse the expandable polymer bead material or later, and ends latest with the end of performing the at least one measure to fuse the expandable polymer bead material or earlier. In other words, creating of the at least one hinge portion will start earliest with the start of performing the at least one measure to fuse the expandable polymer bead material, i. e. when the at least one measure to fuse the expandable or expanded polymer bead material is initiated, and will end latest with the end of performing the at least one measure to fuse the expandable or expanded polymer bead material, i. e. when the at least one measure to fuse the expandable or expanded polymer bead material is completed.

The method thus, comprises creating the at least one hinge portion simultaneously with fusing the expandable or expanded polymer bead material which not only enables carrying out the method in more time-efficient manner since performing one or more separate steps in which a respective hinge portion is created after fusion of the expandable or expanded polymer bead material has been completed is avoided but the method surprisingly also results in improved structural properties, e.g. particularly mechanical properties, of the plastic component and the at least one hinge portion, respectively. This is very likely related with the fact that, due to avoiding creation of the at least one hinge portion, after fusing of the expandable or expanded polymer bead material has been completed, the risk that the at least one hinge portion is not properly fixed as also the fused material shows some resilient behavior and "tries to return" to its shape before the creation of the at least one hinge portion. This particularly, applies to embodiments of the method in which resilient expandable or expanded polymer bead materials, such as EPE-materials, EPP-materials, EPA-materials, EPC-materials, EPE-materials, EPLA-materials or- ETPU-materials, are processed.

Hence, the method represents an improved principle of manufacturing a plastic component from an expandable or expanded polymer bead material, the plastic component comprising at least one hinge portion.

According to an exemplary embodiment, the at least one hinge portion is created by moving at least one movable molding tool element from a first orientation and/or position in a second orientation and/or position. Hence, the method can be carried out using a molding tool which comprises at least one movable tool element which is, particularly reversibly, movable between a first orientation and/or position and a second orientation and/or position. A respective first orientation and/or position can be related with a retracted state of the at least one movable tool element. Particularly, a respective first orientation and/or position can be related with a retracted state of the at least one movable tool element in which the at least one movable tool element does not extend into the cavity or only partly extends in the cavity. A respective second orientation and/or position be related with a non-retracted state of the at least one movable tool element. Particularly, a respective second orientation and/or position be related with a non-retracted state of the at least one movable tool element in which the at least one movable tool element at least partially extends into the cavity or extends further in the cavity than in the first state. A respective movable tool element can be embodied as an anvil, a slider, etc. for instance.

Movements of the at least one tool element between the respective first orientation and/or position and second orientation and/or position can be controlled, i.e. particularly initiated and/or stopped, via a hardware- and/or software embodied control unit assigned to an actuating device, e.g. a hydraulic drive device, pneumatic drive device, or (electro)mechanical drive device, for generating driving forces which facilitate movements of the at least one movable tool element between the respective first orientation and/or position and second orientation and/or position and/or vice versa.

As such, the method can comprise detecting, via a hardware- and/or software-embodied detection unit, the orientation and/or position of the at least one movable tool element before, during, or after motion from the first orientation and/or position in the second orientation and/or position or vice versa. Detecting the orientation and/or position of the at least one movable tool element can facilitate exact motion control of the at least one movable tool element which can improve exact shaping of the at least one hinge portion.

As indicated above, the method comprises creating the at least one hinge portion during step b). As such, the or a motion of the at least one movable molding tool element from the first orientation and/or position in the second orientation and/or position can start with the start of performing the at least one measure to fuse the expandable polymer bead material or later. Likewise, the or a motion of the at least one movable molding tool element from the first orientation and/or position in the second orientation and/or position can end with the end of performing the at least one measure to fuse the expandable polymer bead material or earlier.

Hence, a respective control unit can, be configured to start the or a motion of the at least one movable molding tool element from the first orientation and/or position in the second orientation and/or position with the start of performing the at least one measure to fuse the expandable polymer bead material or later. Likewise, a respective control unit can be configured to end the or a motion of the at least one movable molding tool element from the first orientation and/or position in the second orientation and/or position with the end of performing the at least one measure to fuse the expandable polymer bead material or earlier.

According to a further exemplary embodiment, the motion of the at least one movable molding tool element from the first orientation and/or position in the second orientation and/or position, or vice versa, can be controlled, i.e. particularly initiated and/or stopped, via a control unit, on basis of data, particularly sensor data, indicative of at least one process condition inside the mold and/or mold cavity. Particularly, motion of the at least one movable molding tool element from the first orientation and/or position in the second orientation and/or position can be controlled, i.e. particularly initiated and/or stopped, via a control unit, on basis of data, particularly sensor data, indicative of at least one process condition inside the mold and/or mold cavity which process condition is indicative of the fusing state or fusing progress in step b). Respective data can be data, such as historic data, of one or more previous manufacturing processes and/or data, such as in-situ data, from the instant manufacturing process. In either case, respective data can be sensor data, i.e. data derivable or derived from one or more sensors provided with the molding tool. Respective sensors can particularly be provided with one or more respective molding tool parts. As an example, respective sensors can be provided with at least one shaping contour surface of at least one molding tool part. Respective sensors can also be provided with the at least one movable tool element.

Particularly, the motion of the at least one movable molding tool element from the first orientation and/or position in the second orientation and/or position, or vice versa, is controlled via a control unit, on basis of data, particularly sensor data, indicative of at least one of temperature, pressure, (relative) humidity inside the mold and/or the mold cavity. As such, respective data, particularly sensor data, can be derived from one or more temperature sensors, pressure sensors, or (relative) humidity sensors provided with the molding tool. Respective sensors can particularly be provided with one or more respective molding tool parts. As an example, respective sensors can be provided within or close to at least one shaping contour surface of at least one molding tool part. Alternatively or additionally, respective data can also be time-data, particularly process-time-data, such that the motion of the at least one movable molding tool element from the first orientation and/or position in the second orientation and/or position can be controlled, e.g. initiated and/or stopped, based on time, particularly process-time. As an example, motion of the at least one movable molding tool element can be initiated at a certain time, e.g. a second or a fraction of a second, after the start of step b) and/or end at a certain time before the end of step b). It is also conceivable that the motion of the at least one movable molding tool element can be initiated at a certain time, e.g. a second or a fraction of a second, before the start of step b).

As far as the motion of the at least one movable molding tool element from the first orientation and/or position in the second orientation and/or position is controlled on basis of temperature data, the softening temperature and/or the glass transition temperature and/or the melting temperature of the expandable or expanded polymer bead material can be considered and motion of the at least one movable tool element can be controlled on basis of a temperature difference between an actual temperature and the softening temperature and/or the glass transition temperature and/or the melting temperature of the expandable or expanded polymer bead material which is processed, for instance.

According to a further exemplary embodiment, the at least one movable tool element can comprise at least one, particularly curved or inclined, shaping contour for shaping the at least one hinge portion. As such, also the at least one movable tool element can be provided with a hinge portion shaping function. As an example, the at least one shaping contour of the at least one movable tool element can comprise at least one projection extending off a base portion of the at least one movable tool element and/or at least one recess within a base portion of the at least one movable tool element.

According to a further exemplary embodiment, the at least one movable tool element can be provided with a tempering structure configured to temper, i.e. heat and/or cool, the at least one moveable tool element and/or at least a part of the expandable or expanded polymer bead material within the cavity of the molding tool. A respective tempering structure can be particularly, configured to provide additional thermal energy, e.g. heat, to the at least one hinge portion at least during step b) so as to influence the properties of the at least one hinge portion, e.g. by a specific thermally induced local fusing. A respective tempering structure can be built as or comprise an internal channel structure for a tempering fluid streaming through the at least one movable tool element. A respective internal channel structure can comprise one or more channel structure sections extending in one or more spatial directions through the at least one movable tool element. A respective internal channel structure can comprise one or more outlet openings through which a tempering fluid can exit the internal channel structure. Respective outlet openings can be provided with a free distal end of the at least one movable tool element. Alternatively or additionally, a respective tempering structure can be provided as an electric heating element, such as heating wire or the like, and/or as an electromagnetic heating element, such as an electromagnetic radiator or the like. A respective electric heating element can comprise electric one or more heating element sections extending in one or more spatial directions through the at least one movable tool element.

According to a further exemplary embodiment, at least one molding tool part can comprise at least one, particularly curved or inclined, shaping contour for shaping the at least one hinge portion. As such, also at least one molding tool part can be provided with a hinge portion shaping function. As an example, the at least one shaping contour of the at least one molding tool part element can comprise at least one projection extending off a base portion of the respective molding tool part. A respective molding tool part can be provided with an internal channel structure for at least one tempering fluid, such as a tempering gas or a tempering liquid, streaming through the internal channel structure within the at least one molding tool part, particularly below a respective shaping contour.

In exemplary embodiments in which both a respective movable tool element and at least one molding tool part are provided with a respective shaping contour, the shaping contour provided with the at least one movable tool element can be arranged opposite the shaping contour provided with the at least one molding tool part such that a free end, such as a distal end, of the shaping contour provided with the at least one movable tool element is arrangeable or arranged opposite a free end, such as a distal end, of the shaping contour provided with the at least one molding tool part.

According to related exemplary embodiments, the at least one shaping contour can be provided with a separate shaping insert part which is insertable or inserted in an insert part receiving portion of the first molding tool part or the at least one second molding tool part. A respective shaping insert part can comprise one or more shaping portions, such as curved, inclined, stepped portions, for instance. The molding tool can thus, be provided with different shaping contours by using differently shaped shaping insert parts receivable or received in a respective receiving portion of at least one molding tool part. The flexibility of the method with respect to creating differently shaped plastic components and particularly, hinge portions can thus, be increased.

According to further exemplary embodiments, the method can comprise at least one optional step which is performed before step b). An example of a respective optional step is specified in the following:
A respective optional step which can be performed before step b) can comprise a pressure application or compression step in which a certain pressure or compression force is applied to the expandable or expanded polymer bead material in the cavity. A respective pressure application or compression of the expandable or expanded polymer bead material can be achieved by moving at least one molding tool part relative another molding tool part. Particularly, a respective pressure application can be achieved by moving at least one molding tool part relative to another molding tool part such that the movable molding tool part at least partly engages in the cavity and thereby, reduces a nominal volume of the cavity of the molding tool.

According to further exemplary embodiments, the method can comprise at least one optional step performed after step b). Examples of respective optional steps are specified in the following:
A respective optional step which can be performed after step b) can comprise a cooling step in which the plastic component is cooled within the cavity. A respective cooling step can comprise using a cooling fluid, such as water, to cool the molding tool and the plastic component included therein. A respective cooling step can support an effective consolidation of the fused structure forming the plastic component inside the cavity.

Alternatively or additionally, a respective optional step which can be performed after step b) can comprise a demolding step in which the plastic component is demolded from the cavity. Demolding typically comprises opening the molding tool so as to enable demolding the plastic component from the cavity.

A second aspect relates to a plastic component made from an expandable or expanded polymer bead material. The plastic component comprises at least one hinge portion. The plastic component is manufactured in accordance with the method of the first aspect of the invention such that all remarks regarding the method of the first aspect of the invention also apply to the plastic component of the second aspect and vice versa.

The plastic component can be shaped and sized to be used in construction applications, packaging applications, engineering applications, insulating applications, etc.

A third aspect relates to a molding tool for manufacturing a plastic component from an expandable or expanded polymer bead material, the plastic component comprising at least one hinge portion. The molding tool is particularly, configured for carrying out the method of the first aspect of the invention such that all remarks regarding the method of the first aspect of the invention also apply to the molding tool of the third aspect and vice versa. The molding tool thus, particularly comprises a cavity which can be filled with an expandable or expanded polymer bead material and at least one device for performing at least one measure to fuse the expandable or expanded polymer bead material.

With these and other advantages and features that will become hereinafter apparent, a more complete understanding of the invention can be obtained by referring to the following description of the appended drawings in which:
Fig. 1 is a block diagram of a method for manufacturing a plastic component from an expandable or expanded polymer bead material according to an exemplary embodiment;
Fig. 2 is a graph indicating the creation of at least one hinge portion while performing at least one measure to fuse the expandable polymer bead material in context with the method of Fig. 1;
Fig. 3 - 8 are principle drawings of molding tools useable for carrying out the method of Fig. 1 according to exemplary embodiments; and
Fig. 9 is a principle drawing of a plastic component manufactured in accordance with a method according to an exemplary embodiment.

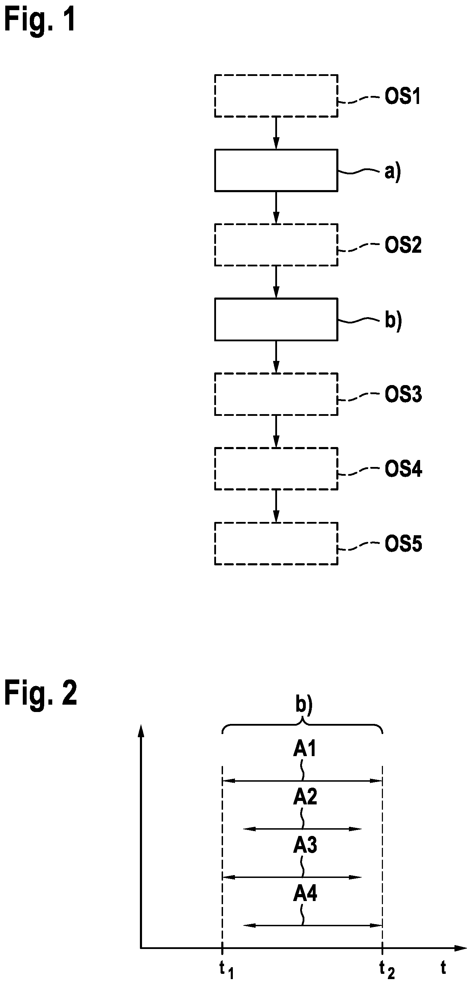

Fig. 1 is a block diagram of a method for manufacturing a plastic component 1 from an expandable or expanded polymer bead material according to an exemplary embodiment. The method pertains to the manufacture of at least one plastic component 1 from an expandable or expanded polymer bead material, wherein the at least one plastic component 1 comprises at least one hinge portion 1.1.

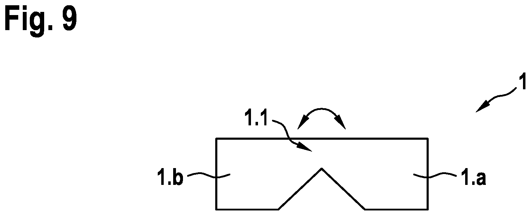

The plastic component 1 is thus, via the at least one hinge portion 1.1 which typically defines a hinge axis, transferrable between a first state (see Fig. 9) and a second state (not shown) or vice versa. In a respective first state, a first section 1.a of the plastic component 1 can be in a first spatial orientation and/or position relative to at least one second section 1.b of the plastic component 1. In a respective second state, the first section 1.a of the plastic component 1 can be in a second orientation and/or position relative to the at least one second section 1.b of the plastic component 1. Respective transfers of the plastic component 1 between respective first and second states are typically reversible and can be performed multiple times without compromising the structural properties of the at least one hinge portion 1.1.

As is apparent from Fig. 9, a respective hinge portion 1.1 can be built by or comprise region of reduced cross-section of the plastic component 1. Particularly, a respective hinge portion 1.1 can be built by a region of reduced cross-section of a base section of the plastic component 1. A respective base section of the plastic component 1 can e.g. have a plate-like or plate-shape.

As is also apparent from Fig. 9, the plastic component 1 can be a monolithic component which means that the plastic component 1 is monolithically made from the respective expandable or expanded polymer bead material processed. In other words, all regions of the plastic component 1 including regions comprising the at least one hinge portion 1.1 are made from the expandable or expanded polymer bead material which has been processed in the method. As such, the at least one hinge portion 1.1 is typically built as a or comprises a film hinge.

The material processable or processed in the method is an expandable or expanded polymer bead material which typically has a cellular or foamed (micro)structure.

Non-limiting examples of expandable or expanded polymer bead materials which can be processed in the method are expandable or expanded polyester-based bead materials, such as expanded or expandable polycarbonate-based materials (EPC), expanded or expandable polyethylene-terephthalate-based materials (EPET), expanded or expandable polylactic-acid-based materials (EPLA), expandable or expanded polyolefin-based bead materials (EPO-materials), such as expandable or expanded polyethylene-based bead materials (EPE-materials) and/or expandable or expanded polypropylene-based bead materials (EPP-materials), expandable or expanded polyamide-based bead materials (EPA-materials), or expandable or expanded polyurethane-based bead materials (ETPU-materials). In either case, the term "expandable or expanded polymer bead material" can generally comprise expandable or expanded co-polymer bead materials. Also, the term "expandable or expanded polymer bead material" can generally comprise at least two expandable or expanded polymer bead materials differing in at least one chemical and/or physical property. The material which is processed in the method is thus, not a conventional compact polymer material as used e.g. in injection molding or extrusion.

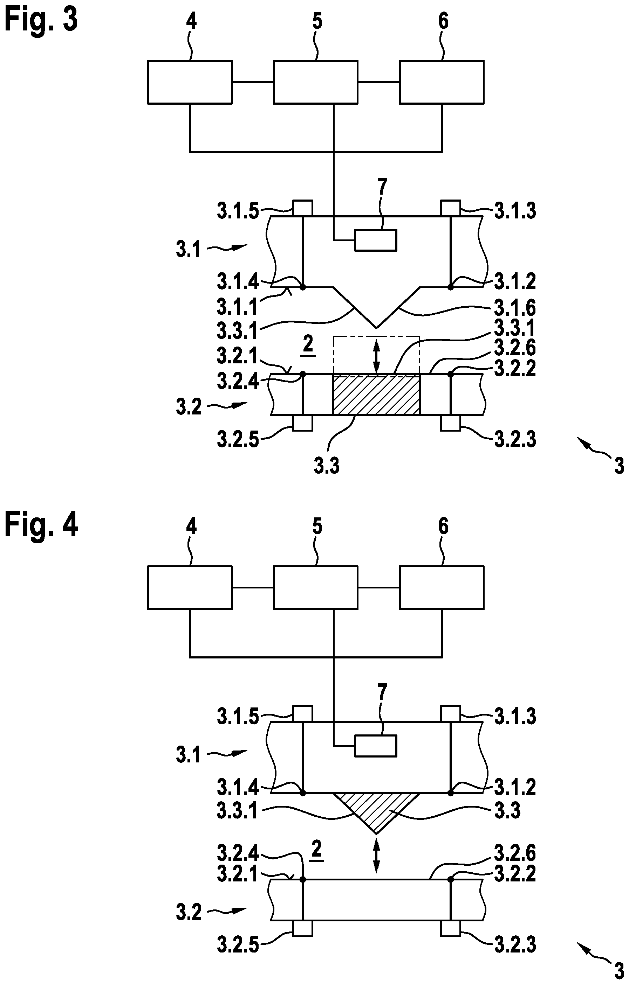

The essential steps of the method are specified in the following with respect to Fig. 1:
The method comprises step a) which comprises filling an expandable or expanded polymer bead material in a cavity 2 of a molding tool 3 (see Fig. 3 - 8). Step a) can be performed via a filling device configured for filling an expandable or expanded polymer bead material in the cavity 2 of a respective molding tool 3, wherein a respective filling device can be or comprise a filling stream generating device configured to generate a filling stream, such as a filling fluid stream, e.g. a filling gas stream, with which the expandable or expanded polymer bead material can be filled into the cavity 2 of the respective molding tool 3.

As is apparent from Fig. 3 - 8, a respective molding tool 3 can comprise two molding tool parts 3.1, 3.2 each comprising one or more shaping contour surfaces 3.1.1, 3.2.1 which, at least in a closed state of the molding tool 3, define the cavity 2 which is shaped to substantially define the plastic component 1 to be manufactured. A respective closed state of the molding tool 3 can be accomplished by moving at least one molding tool part 3.1, 3.2 relative to another molding tool part 3.1, 3.2. In like manner, a respective open state of the molding tool 3 can be accomplished by moving at least one molding tool part 3.1, 3.2 relative to another molding tool part 3.1, 3.2. The molding tool 3 used for carrying out the method thus, typically comprises a molding tool part 3.1, 3.2 which is movable supported relative to another molding tool part 3.1, 3.2 so as to transfer the molding tool 3 from an open state in a closed state and vice versa.

The method further comprises step b) which comprises performing at least one measure to fuse the expandable or expanded polymer bead material filled in the cavity 2 of the molding tool 3. Fusing of the expandable or expanded polymer bead material therefore, results in combining the plurality of polymer beads to form the actual plastic component 1. Fusing of the expandable or expanded polymer bead material typically occurs at a temperature level, typically a material-specific temperature level, below the glass transition temperature (typically for amorphous polymer materials) or the melting temperature (typically for at least partly crystalline polymer materials), respectively of the expandable or expanded polymer bead material. Hence, the expandable or expanded polymer bead material will not be transferred in a fully melted state before, during, and after fusing. The fusing temperature of the expandable or expanded polymer bead material is thus, typically below a glass transition temperature or a melting temperature, respectively of the expandable or expanded polymer bead material so as to avoid that the expandable or expanded polymer bead material, i.e. particularly the actual polymer beads, is/are transferred in a fully melted state. Yet, the fusing temperature of the expandable or expanded polymer bead material can be below, at or (slightly) above a softening temperature, particularly even close or at least for a certain period of time close to, at or above the glass transition temperature or melting temperature, respectively of the expandable or expanded polymer bead material. As such, the surface of the expandable or expanded polymer bead material can be softened and/or melted during fusing which can facilitate fusing of the polymer beads to form the plastic component.

Fusing of the expandable or expanded polymer bead material can comprise introducing at least one process fluid, particularly a heated process fluid, or a fusing stream comprising a respective process fluid into the cavity 2 of the molding tool 3. A respective process fluid can be steam, for instance. Step b) can thus, be performed via a fusing device configured for fusing expandable or expanded polymer bead material in the cavity of the molding tool. A respective fusing device can be or comprise a fusing stream generating device configured to generate a respective fusing stream, such as a steam stream, with which the expandable or expanded polymer bead material can be fused in the cavity of the molding tool. A respective fusing stream can be introduced into the cavity via a plurality of, e.g. nozzle- or slit-like openings, provided with a respective shaping contour surface one or more molding tool parts.

Hence, step b) can comprise that at least one process fluid is, if need be pressurized, introduced into the cavity 2 of the molding tool 3 through at least one inlet opening 3.1.2, 3.2.2 of at least one molding tool part 3.1, 3.2, wherein the at least one inlet opening 3.1.2, 3.2.2 is open because a streaming control element 3.1.3, 3.2.3, such as a valve element, assigned to the at least one inlet opening 3.1.2, 3.2.2 is in its open state. Further, in step b), possible one or more outlet openings 3.1.4, 3.2.4 provided with the or at least one molding tool part 3.1, 3.2 can be opened or closed via an assigned streaming control element 3.1.5, 3.2.5 such the at least one process fluid can flow through the cavity 2 and exit the cavity 2 via the at least one outlet opening 3.1.4, 3.2.4 when the respective streaming control element 3.1.5, 3.2.5 assigned to the at least one outlet opening 3.1.4, 3.2.4 is in its opened state, e.g. when fusing is implemented as cross-steaming, or the at least one process fluid can (only) flow within the cavity 2 without exiting the cavity 2 via the at least one outlet opening 3.1.4, 3.2.4 when respective the streaming control element 3.1.5, 3.2.5 assigned to the at least one outlet opening 3.1.4, 3.2.4 is in its closed state, e.g. when fusing is implement as autoclave-steaming. Hence, step b) can comprise cross-steaming or autoclave-steaming, for instance. Operation of respective streaming control elements 3.1.3, 3.2.3, 3.1.5, 3.2.5, e.g. to transfer them in respective open and/or closed states, can be controlled on basis of data, such as sensor data, particularly sensor data derived from sensors 7 provided with the molding tool 3.

Alternatively or additionally, fusing of the expandable or expanded polymer bead material in step b) can comprise introducing electromagnetic radiation, such as e.g. infrared-waves, micro-waves, radiofrequency-waves, into the cavity 2 of the molding tool 3. Step b) can thus, be performed via a radiation device configured for fusing expandable or expanded polymer bead material in the cavity 2 of the molding tool 3. A respective radiation device can be or comprise a radiation generating device configured to generate respective electromagnetic radiation with which the expandable or expanded polymer bead material can be fused in the cavity 2 of the molding tool 3.

The method comprises creating of the at least one hinge portion 1.1 during step b). As such, the at least one hinge portion 1.1 is created during performing the at least one measure to fuse the expandable or expanded polymer bead material and thus, during fusing of the expandable or expanded polymer bead material. Hence, the method comprises creating the at least one hinge portion 1.1 while the expandable or expanded polymer bead material is being fused. This means that creating of the at least one hinge portion 1.1 starts earliest with the start of performing the at least one measure to fuse the expandable polymer bead material (see time t₁ in Fig. 2) or later, and ends latest with the end of performing the at least one measure to fuse the expandable polymer bead material (see time t₂ in Fig. 2) or earlier. In other words, as indicated by the double arrow A1 - A4 in Fig. 2 creating of the at least one hinge portion 1.1 will start earliest with the start of performing the at least one measure to fuse the expandable polymer bead material, i. e. when the at least one measure to fuse the expandable or expanded polymer bead material is initiated at time t₁, and will end latest with the end of performing the at least one measure to fuse the expandable or expanded polymer bead material, i. e. when the at least one measure to fuse the expandable or expanded polymer bead material is completed at time t₂.

The method thus, comprises creating the at least one hinge portion 1.1 simultaneously with fusing the expandable or expanded polymer bead material which not only enables carrying out the method in more time-efficient manner since performing one or more separate steps in which a respective hinge portion 1.1 is created after fusion of the expandable or expanded polymer bead material has been completed is avoided but the method surprisingly also results in improved structural properties, e.g. particularly mechanical properties, of the plastic component 1 and the at least one hinge portion 1.1, respectively. This is very likely related with the fact that, due to avoiding creation of the at least one hinge portion 1.1, after fusing of the expandable or expanded polymer bead material has been completed, the risk that the at least one hinge portion 1.1 is not properly "fixed" as also the fused material shows some resilient behavior and "tries to return" to its shape before the creation of the at least one hinge portion 1.1. This particularly, applies to embodiments of the method in which resilient expandable or expanded polymer bead materials, such as EPE-materials, EPP-materials, EPA-materials, EPC-materials, EPE-materials, EPLA-materials or- ETPU-materials, are processed.

According to an exemplary embodiment, the at least one hinge portion 1.1 is created by moving at least one movable molding tool element 3.3 from a first orientation and/or position in a second orientation and/or position. Hence, the method can be carried out using a molding tool 3 which comprises at least one movable tool element 3.3 which is, particularly reversibly, movable between a first orientation and/or position and a second orientation and/or position. A respective first orientation and/or position can be related with a retracted state of the at least one movable tool element 3.3. Particularly, a respective first orientation and/or position be related with a retracted state of the at least one movable tool element 3.3 in which the at least one movable tool element 3.3 does not extend into the cavity 2 or only partly extends in the cavity 2 (see e.g. Fig. 3). A respective second orientation and/or position be related with a non-retracted state of the at least one movable tool element 3.3 (see dotted line in Fig. 3). Particularly, a respective second orientation and/or position can be related with a non-retracted state of the at least one movable tool element 3.3 in which the at least one movable tool element 3.3 at least partially extends into the cavity 2 or extends further in the cavity 2 than in the first state. A respective movable tool element 3.3 can be embodied as an anvil, a slider, etc. for instance.

Movements of the at least one tool element 3.3 between the respective first orientation and/or position and second orientation and/or position can be controlled, i.e. particularly initiated and/or stopped, via a hardware- and/or software embodied control unit 4 assigned to an actuating device 5, e.g. a hydraulic drive device, pneumatic drive device, or (electro)mechanical drive device, for generating driving forces facilitating movements of the at least one movable tool element 3.3 between the respective first orientation and/or position and second orientation and/or position and/or vice versa.

As such, the method can comprise detecting, via a hardware- and/or software-embodied detection unit 6, the orientation and/or position of the at least one movable tool element 3.3 before, during, or after motion from the first orientation and/or position in the second orientation and/or position or vice versa. Detecting the orientation and/or position of the at least one movable tool element 3.3 can facilitate exact motion control of the at least one movable tool element 3.3 which can improve exact shaping of the at least one hinge portion 1.1.

As indicated above, the method comprises creating the at least one hinge portion 1.1 during step b). As such, the or a motion of the at least one movable molding tool element 3.3 from the first orientation and/or position in the second orientation and/or position can start with the start of performing the at least one measure to fuse the expandable polymer bead material or later. Likewise, the or a motion of the at least one movable molding tool element 3.3 from the first orientation and/or position in the second orientation and/or position can end with the end of performing the at least one measure to fuse the expandable polymer bead material or earlier.

Hence, a respective control unit 4 can, be configured to start the or a motion of the at least one movable molding tool element 3.3 from the first orientation and/or position in the second orientation and/or position with the start of performing the at least one measure to fuse the expandable polymer bead material or later. Likewise, a respective control unit 4 can be configured to end the or a motion of the at least one movable molding tool element 3.3 from the first orientation and/or position in the second orientation and/or position with the end of performing the at least one measure to fuse the expandable polymer bead material or earlier.

The motion of the at least one movable molding tool element 3.3 from the first orientation and/or position in the second orientation and/or position, or vice versa, can be controlled, i.e. particularly initiated and/or stopped, via the control unit 4, on basis of data, particularly sensor data, indicative of at least one process condition inside the molding tool 3 and/or the mold cavity 2. Particularly, motion of the at least one movable molding tool element 3.3 from the first orientation and/or position in the second orientation and/or position can be controlled, i.e. particularly initiated and/or stopped, via the control unit 4, on basis of data, particularly sensor data, indicative of at least one process condition inside the molding tool 3 and/or the cavity 2 which process condition is indicative of the fusing state or progress in step b). Respective data can be data, such as historic date, of one or more previous manufacturing processes and/or data, such as in-situ data, from the instant manufacturing process. In either case, respective data can be sensor data, i.e. data derivable or derived from one or more sensors 7 (exemplarily indicated in Fig. 3) provided with the molding tool 3.

Particularly, the motion of the at least one movable molding tool element 3 from the first orientation and/or position in the second orientation and/or position, or vice versa, is controlled via the control unit 4, on basis of data, particularly sensor data, indicative of at least one of temperature, pressure, (relative) humidity inside the molding tool 3 and/or the cavity 2. As such, respective data, particularly sensor data, can be derived from one or more temperature sensors, pressure sensors, or (relative) humidity sensors provided with the molding tool 3.

In either case, respective sensors 7 can be provided with one or more molding tool parts 3.1, 3.2. As an example, respective sensors 7 can be provided with at least one shaping contour surface 3.1.1, 3.2.1 of at least one molding tool part 3.1, 3.2. Respective sensors 7 can also be provided with the at least one movable tool element 3.3.

Alternatively or additionally, respective data can also be time-data, particularly process-time-data, such that the motion of the at least one movable molding tool element 3.3 from the first orientation and/or position in the second orientation and/or position can be controlled, e.g. initiated and/or stopped, based on time, particularly process-time. As an example, motion of the at least one movable molding tool element 3 can be initiated at a certain time, e.g. a second or a fraction of a second, after the start of step b) and/or end at a certain time before the end of step b) as exemplarily indicated in Fig. 2 by double-arrows A2 - A4.

As far as the motion of the at least one movable molding tool element 3.3 from the first orientation and/or position in the second orientation and/or position is controlled on basis of temperature data, the softening temperature and/or the glass transition temperature and/or the melting temperature of the expandable or expanded polymer bead material can be considered and motion of the at least one movable tool element 3.3 can be controlled on basis of a temperature difference between an actual temperature and the softening temperature and/or the glass transition and/or the melting temperature of the expandable or expanded polymer bead material which is processed, for instance.

Exemplary configurations of the molding tool 3, particularly molding tool parts 3.1, 3.2, and a respective movable tool element 3.3 will now be described in context with the embodiments of Fig. 3 - 8:
The embodiment of Fig. 3 shows an exemplary configuration of a molding tool 3 which comprises a shaping contour 3.1.6 for shaping the at least one hinge portion 1.1 provided with a first molding tool part 3.1. In the exemplary embodiment, the shaping contour 3.1.6 has the shape of a triangle having its apex facing the free distal end of the movable tool element 3.3 which is slidably received in the other molding tool part 3.2. In the exemplary embodiment, the free distal end of the movable tool element 3.3 has a plane shape; however, other shapes are contemplated.

The embodiment of Fig. 4 shows an exemplary configuration of a molding tool 3 which comprises a shaping contour 3.3.1 for shaping the at least one hinge portion 1.1 provided with a movable tool element 3.3 which is slidably received in molding tool part 3.1. In the exemplary embodiment, the shaping contour 3.3.1 has the shape of a triangle having its apex facing the base plane of the other molding tool part 3.2.

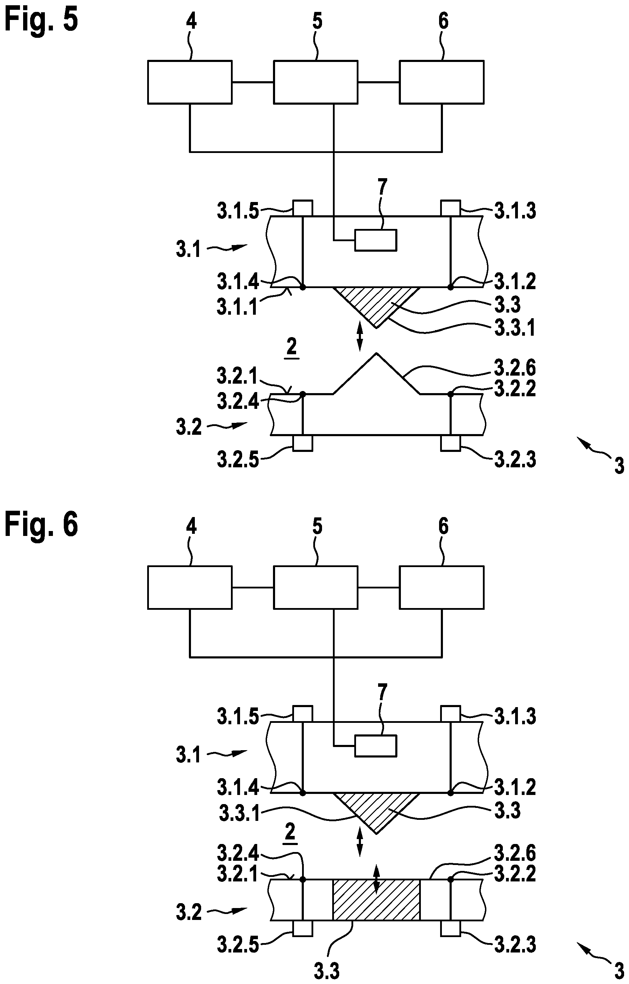

The embodiment of Fig. 5 shows an exemplary configuration of a molding tool 3 which comprises a shaping contour 3.3.1 for shaping the at least one hinge portion 1.1 provided with a movable tool element 3.3 which is slidably received in molding tool part 3.1. In the exemplary embodiment, the shaping contour 3.3.1 has the shape of a triangle having its apex facing a shaping contour 3.2.6 for shaping the at least one hinge portion 1.1 provided with the other molding tool part 3.2. The shaping contour 3.2.6 of the other molding tool part 3.2 is also embodied as a triangle; however, other shapes are contemplated.

The embodiment of Fig. 6 is a combination of the embodiments of Fig. 3 and Fig. 4 which means that both molding part segments 3.1, 3.2 are provided with movable tool elements 3.3. In the exemplary embodiment, the movable tool element 3.3 is slidably received in molding tool part 3.1. In the exemplary embodiment, the shaping contour 3.3.1 of the movable tool element 3.3 provided with molding tool part 3.1 has the shape of a triangle having its apex facing the plane shape of the moveable tool element 3.3 provided with molding tool part 3.2. An inverse configuration of the molding tool parts 3.1, 3.2 and movable tool elements 3.3 is conceivable as well.

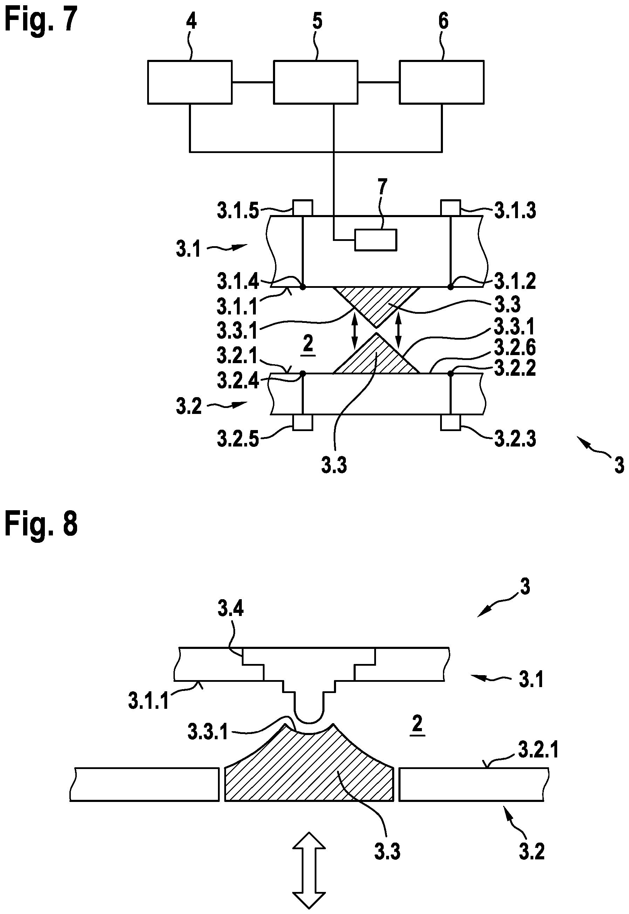

The embodiment of Fig. 7 is a variation of the embodiment of Fig. 6 and differs from the embodiment of Fig. 6 solely in the shape of the movable tool element 3.3 provided with molding tool part 3.2 since this moveable tool element 3.3 also has the shape of a triangle.

Hence, it is apparent from the exemplary embodiment of Fig. 3 - 8 that a respective movable tool element 3.3 can generally comprise at least one, particularly curved or inclined, shaping contour 3.3.1 for shaping the at least one hinge portion 1.1. As such, also the at least one movable tool element 3.3 can be provided with a hinge portion shaping function. A respective shaping contour 3.3.1 can comprise at least one projection extending off a base portion of the at least one movable tool element 3.3 and/or at least one recess within a base portion of the at least one movable tool element 3.3.

Further, it is apparent from the exemplary embodiments of Fig. 3 - 7 that, additionally or alternatively, also a respective molding tool part 3.1, 3.2 can comprise at least one, particularly curved or inclined, shaping contour 3.1.6, 3.2.6 for shaping the at least one hinge portion 1.1. As such, also at least one molding tool part 3.1, 3.2 can be provided with a hinge portion shaping function. A respective shaping contour 3.1.6, 3.2.6 can comprise at least one projection, such as a respective triangle, extending off a base portion of the respective molding tool part 3.1, 3.2.

Fig. 8 shows an exemplary embodiment in which a shaping contour can be provided with a separate shaping insert part 3.4 which is insertable or inserted in an insert part receiving portion of at least one molding tool part 3.1, 3.2. A respective shaping insert part 3.4 can comprise one or more shaping portions, such as curved, inclined, stepped portions, for instance. The molding tool 3 can thus, be provided with different shaping contours by using differently shaped shaping insert parts 3.4 receivable or received in a respective receiving portion of at least one molding tool part 3.1, 3.2.

Even if not shown in Fig. 3 - 8, a respective movable tool element 3.3 can be provided with a tempering structure configured to temper, i.e. heat and/or cool, the moveable tool element 3.3 and/or at least a part of the expandable or expanded polymer bead material within the cavity 2 of the molding tool 3. A respective tempering structure can be particularly, configured to provide additional thermal energy, e.g. heat, to the at least one hinge portion 1.1 at least during step b) so as to influence the properties of the at least one hinge portion 1.1, e.g. by a specific thermally induced local fusing. A respective tempering structure can be built as or comprise an internal channel structure for a tempering fluid streaming through the movable tool element 3.3. A respective internal channel structure can comprise one or more channel structure sections extending in one or more spatial directions through the movable tool element 3.3. A respective internal channel structure can comprise one or more outlet openings through which a tempering fluid can exit the internal channel structure. Respective outlet openings can be provided with a free distal end of the movable tool element 3.3. Alternatively or additionally, a respective tempering structure can be provided as an electric heating element, such as heating wire or the like, and/or as an electromagnetic heating element, such as an electromagnetic radiator or the like. A respective electric heating element can comprise electric one or more heating element sections extending in one or more spatial directions through the movable tool element 3.3.

Referring back to Fig. 1, it is shown that the method can comprise one or more optional steps OS1 - OS2 which can be performed before step b). Examples of respective optional steps OS1 - OS2 are specified in the following:
A first optional step OS1 can comprise a mold closing step in which the molding tool 3 is closed via respective movements of the molding tool parts 3.1, 3.2 relative to each other.

A second optional step OS2 comprise a pressure application or compression step in which a certain pressure or compression force is applied to the expandable or expanded polymer bead material in the cavity 2. A respective pressure application or compression of the expandable or expanded polymer bead material can be achieved by moving at least one molding tool part 3.1, 3.2 relative another molding tool part 3.1, 3.2. Particularly, a respective pressure application can be achieved by moving at least one molding tool part 3.1, 3.2 relative to another molding tool part 3.1, 3.2 such that the movable molding tool part 3.1, 3.2 at least partly engages in the cavity 2 and thereby, reduces a nominal volume of the cavity 2 of the molding tool 3.

Fig. 1 also shows that the method can comprise at least one optional step OS3 - OS5 which can be performed after step b). Examples of respective optional steps OS3 - OS5 are specified in the following:
A respective optional step OS3 which can be performed after step b) can comprise a cooling step in which the plastic component 1 is cooled within the cavity 2. A respective cooling step can comprise using a cooling fluid, such as water, to cool the molding tool 3 and the plastic component 1 included therein. A respective cooling step can support an effective consolidation of the fused structure forming the plastic component inside the cavity.

A following optional step OS4 can comprise a mold opening step in which the molding tool 3 is opened via respective movements of the molding tool parts 3.1, 3.2 relative to each other.

Finally, a respective optional step OS5 can comprise a demolding step in which the plastic component 1 is demolded from the cavity 2 of the molding tool 3.

## Claims

1. Method for manufacturing a plastic component (1) from an expandable or expanded polymer bead material, the plastic component (1) comprising at least one hinge portion (1.1), the method comprising the following steps:
a) filling an expandable or expanded polymer bead material in a cavity (2) of a molding tool (3);
b) performing at least one measure to fuse the expandable or expanded polymer bead material; **characterized in that** the at least one hinge portion (1.1) is created during step b) while the expandable or expanded polymer bead material is being fused.

2. The method of Claim 1, wherein the at least one hinge portion (1.1) is created by moving at least one movable molding tool element (3.3) from a first orientation and/or position in a second orientation and/or position.

3. The method of Claim 2, wherein the motion of the at least one movable molding tool element (3.3) from the first orientation and/or position in the second orientation and/or position starts with the start of performing the at least one measure to fuse the expandable or expanded polymer bead material or later.

4. The method of Claim 2 or 3, wherein the motion of the at least one movable molding tool element (3.3) from the first orientation and/or position in the second orientation and/or position ends with the end of performing the at least one measure to fuse the expandable or expanded polymer bead material or earlier.

5. The method of any of Claims 2 - 4, wherein the motion of the at least one movable molding tool element (3.3) from the first orientation and/or position in the second orientation and/or position is controlled, via a control unit (4), on basis of data, particularly sensor data, indicative of at least one process condition inside the molding tool (3) and/or the cavity (2).

6. The method of Claim 5, wherein the motion of the at least one movable molding tool element (3.3) from the first orientation and/or position in the second orientation and/or position is controlled, via a control unit (4), on basis of data, particularly sensor data, indicative of at least one of temperature, pressure, humidity inside the molding tool (3) and/or the cavity (2).

7. The method of Claim 5 or 6, wherein the motion of the at least one movable molding tool element (3.3) from the first orientation and/or position in the second orientation and/or position is controlled, via a control unit (4), on basis of data, particularly sensor data, indicative of time, particularly process-time, such that the motion of the at least one movable molding tool element (3.3) from the first orientation and/or position in the second orientation and/or position is controlled, e.g. initiated and/or stopped, based on time, particularly process-time.

8. The method of any of Claims 2 - 7, wherein a molding tool (3) is used which comprises a first molding tool part (3.1) and at least one second molding tool part (3.2), wherein the at least one movable tool element (3.3) is at least partly movable supported within at least one of the first molding tool part (3.1) and the at least one second molding tool part (3.2).

9. The method of any of Claims 2 - 8, wherein the at least one movable tool element (3.3) comprises at least one, particularly curved or inclined, shaping contour (3.3.1) for shaping the at least one hinge portion (1.1).

10. The method of any of Claims 2 - 9, wherein the at least one movable tool element (3.3) comprises a tempering structure configured to temper, e.g. heat and/or cool, the at least one moveable tool element and/or at least a part of the expandable or expanded polymer bead material within the cavity (2) of the molding tool (3).

11. The method of any of the preceding Claims, wherein a molding tool (3) is used which comprises a first molding tool part (3.1) and at least one second molding tool part (3.2), wherein at least one of the first molding tool part (3.1) and the at least one second molding tool part (3.2) comprises at least one, particularly curved or inclined, shaping contour (3.1.6, 3.2.6) for shaping the at least one hinge portion (1.1).

12. The method of Claim 11, wherein the at least one shaping contour is provided with a shaping insert part (3.4) insertable in an insert receiving portion of the first molding tool part (3.1) or the at least one second molding tool part (3.2).

13. The method of any of the preceding Claims, wherein performing the at least one measure to fuse the expandable or expanded polymer bead material comprises introducing at least one process fluid, particularly a heated process fluid, more particularly heated steam, into the cavity (2) of the molding tool (3).

14. The method of any of the preceding Claims, wherein the expandable or expanded polymer bead material is a polyester-based bead material, a polyolefin-based bead material, a polyamide-based bead material, or a polyurethane-based bead material.

## Patentansprüche

1. Verfahren zur Herstellung eines Kunststoffbauteils (1) aus einem expandierbaren oder expandierten Kunststoffperlenmaterial, wobei das Kunststoffbauteil (1) wenigstens ein Scharnierteil (1.1) aufweist, wobei das Verfahren die folgenden Schritte umfasst:
a) Einfüllen eines expandierbaren oder expandierten Kunststoffperlenmaterials in einen Hohlraum (2) eines Formwerkzeugs (3);
b) Durchführen wenigstens einer Maßnahme zum Schmelzen des expandierbaren oder expandierten Kunststoffperlenmaterials; **dadurch gekennzeichnet, dass** der wenigstens eine Gelenkabschnitt (1.1) während des Schritts b) erzeugt wird, während das expandierbare oder expandierte Kunststoffperlenmaterial verschmolzen wird.

2. Verfahren nach Anspruch 1, wobei der wenigstens eine Scharnierabschnitt (1.1) durch Bewegen wenigstens eines beweglichen Formwerkzeugelements (3.3) von einer ersten Orientierung und/oder Position in eine zweite Orientierung und/oder Position erzeugt wird.

3. Verfahren nach Anspruch 2, wobei die Bewegung des wenigstens einen beweglichen Formwerkzeugelements (3.3) von der ersten Orientierung und/oder Position in die zweite Orientierung und/oder Position mit dem Beginn der Durchführung der wenigstens einen Maßnahme zum Aufschmelzen des expandierbaren oder expandierten Kunststoffperlenmaterials oder später beginnt.

4. Verfahren nach Anspruch 2 oder 3, wobei die Bewegung des wenigstens einen beweglichen Formwerkzeugelements (3.3) aus der ersten Orientierung und/oder Position in die zweite Orientierung und/oder Position mit dem Ende der Durchführung der wenigstens einen Maßnahme zum Aufschmelzen des expandierbaren oder expandierten Kunststoffperlenmaterials oder früher endet.

5. Verfahren nach einem der Ansprüche 2 bis 4, wobei die Bewegung des wenigstens einen beweglichen Formwerkzeugelements (3.3) von der ersten Orientierung und/oder Position in die zweite Orientierung und/oder Position über eine Steuereinheit (4) auf der Basis von Daten, insbesondere Sensordaten, gesteuert wird, die auf wenigstens einen Prozesszustand innerhalb des Formwerkzeugs (3) und/oder der Kavität (2) hinweisen.

6. Verfahren nach Anspruch 5, wobei die Bewegung des wenigstens einen beweglichen Formwerkzeugelements (3.3) aus der ersten Orientierung und/oder Position in die zweite Orientierung und/oder Position über eine Steuereinheit (4) auf der Basis von Daten, insbesondere Sensordaten, gesteuert wird, die wenigstens eines von Temperatur, Druck, Feuchtigkeit innerhalb des Formwerkzeugs (3) und/oder der Kavität (2) anzeigen.

7. Verfahren nach Anspruch 5 oder 6, wobei die Bewegung des wenigstens einen beweglichen Formwerkzeugelements (3.3) aus der ersten Orientierung und/oder Position in die zweite Orientierung und/oder Position über eine Steuereinheit (4) auf der Basis von Daten, insbesondere Sensordaten, die die Zeit, insbesondere Prozesszeit, angeben, gesteuert wird, so dass die Bewegung des wenigstens einen beweglichen Formwerkzeugelements (3.3) aus der ersten Orientierung und/oder Position in die zweite Orientierung und/oder Position auf der Basis der Zeit, insbesondere Prozesszeit, gesteuert, z.B. eingeleitet und/oder gestoppt wird.

8. Verfahren nach einem der Ansprüche 2 bis 7, wobei ein Formwerkzeug (3) verwendet wird, das ein erstes Formwerkzeugteil (3.1) und wenigstens ein zweites Formwerkzeugteil (3.2) umfasst, wobei das wenigstens eine bewegliche Werkzeugelement (3.3) zumindest teilweise innerhalb des ersten Formwerkzeugteils (3.1) und/oder des wenigstens einen zweiten Formwerkzeugteils (3.2) beweglich gelagert ist.

9. Verfahren nach einem der Ansprüche 2 bis 8, wobei das wenigstens eine bewegliche Werkzeugelement (3.3) wenigstens eine, insbesondere gekrümmte oder geneigte, Formkontur (3.3.1) zur Formung des wenigstens einen Scharnierteils (1.1) aufweist.

10. Verfahren nach einem der Ansprüche 2 bis 9, wobei das wenigstens eine bewegliche Werkzeugelement (3.3) eine Temperierstruktur umfasst, die so konfiguriert ist, dass sie das wenigstens eine bewegliche Werkzeugelement und/oder wenigstens einen Teil des expandierbaren oder expandierten Kunststoffperlenmaterials innerhalb des Hohlraums (2) des Formwerkzeugs (3) temperiert, z.B. erhitzt und/oder kühlt.

11. Verfahren nach einem der vorhergehenden Ansprüche, wobei ein Formwerkzeug (3) verwendet wird, das ein erstes Formwerkzeugteil (3.1) und wenigstens ein zweites Formwerkzeugteil (3.2) aufweist, wobei wenigstens eines von dem ersten Formwerkzeugteil (3.1) und dem wenigstens einen zweiten Formwerkzeugteil (3.2) wenigstens eine, insbesondere gekrümmte oder schräge, Formkontur (3.1.6, 3.2.6) zur Formung des wenigstens einen Scharnierabschnitts (1.1) aufweist.

12. Verfahren nach Anspruch 11, wobei die wenigstens eine formgebende Kontur mit einem formgebenden Einsatzteil (3.4) versehen ist, das in einen Einsatzaufnahmebereich des ersten Formwerkzeugteils (3.1) oder des wenigstens einen zweiten Formwerkzeugteils (3.2) einsetzbar ist.

13. Verfahren nach einem der vorhergehenden Ansprüche, **dadurch gekennzeichnet, dass** die wenigstens eine Maßnahme zum Aufschmelzen des expandierbaren oder expandierten Kunststoffperlenmaterials das Einbringen wenigstens eines Prozessfluids, insbesondere eines erhitzten Prozessfluids, insbesondere erhitzten Dampfes, in die Kavität (2) des Formwerkzeugs (3) umfasst.

14. Verfahren nach einem der vorangehenden Ansprüche, wobei das expandierbare oder expandierte Kunststoffperlenmaterial ein Perlenmaterial auf Polyesterbasis, ein Perlenmaterial auf Polyolefinbasis, ein Perlenmaterial auf Polyamidbasis oder ein Perlenmaterial auf Polyurethanbasis ist.

## Revendications

1. Méthode de fabrication d'un composant en plastique (1) à partir d'un matériel polymère expansible ou expansé, le composant en plastique (1) comprenant au moins une partie charnière (1.1), la méthode comprenant les étapes suivantes :
a) remplir une cavité (2) d'un outil de moulage (3) d'un matériel polymère expansible ou expansé;
b) effectuer au moins une mesure pour fusionner le matériel polymère expansible ou expansé ; **caractérisé en ce que** l'au moins une partie charnière (1.1) est créée pendant l'étape b) alors que le matériel polymère expansible ou expansé est en train d'être fusionné.

2. Méthode de la revendication 1, dans laquelle l'au moins une partie charnière (1.1) est créée en déplaçant au moins un élément mobile de l'outil de moulage (3.3) d'une première orientation et/ou position à une seconde orientation et/ou position.

3. Méthode de la revendication 2, dans laquelle le déplacement d'au moins un élément mobile de l'outil de moulage (3.3) de la première orientation et/ou position dans la seconde orientation et/ou position commence au début de l'exécution d'au moins une mesure pour fusionner le matériel polymère expansible ou expansé, ou plus tard.

4. Méthode de la revendication 2 ou 3, dans laquelle le déplacement d'au moins un élément mobile de l'outil de moulage (3.3) de la première orientation et/ou position dans la seconde orientation et/ou position se termine à la fin de l'exécution d'au moins une mesure de fusion du matériel polymère expansible ou expansé ou plus tôt.

5. Méthode de l'une des revendications 2 à 4, dans laquelle le déplacement d'au moins un élément mobile de l'outil de moulage (3.3) de la première orientation et/ou position à la seconde orientation et/ou position est commandé, par l'intermédiaire d'une unité de commande (4), sur la base de données, en particulier de données de capteurs, indiquant au moins une condition de processus à l'intérieur de l'outil de moulage (3) et/ou de la cavité (2).

6. Méthode de la revendication 5, dans laqelle le mouvement d'au moins un élément mobile de l'outil de moulage (3.3) de la première orientation et/ou position dans la seconde orientation et/ou position est commandé, via une unité de commande (4), sur la base de données, en particulier de données de capteurs, indiquant au moins l'une des valeurs suivantes : température, pression, humidité à l'intérieur de l'outil de moulage (3) et/ou de la cavité (2).

7. Méthode de la revendication 5 ou 6, dans laquelle le mouvement d'au moins un élément mobile de l'outil de moulage (3.3) de la première orientation et/ou position dans la deuxième orientation et/ou position est commandé, via une unité de commande (4), sur la base de données, en particulier de données de capteur, indiquant le temps, en particulier le temps de traitement, de sorte que le mouvement d'au moins un élément mobile de l'outil de moulage (3.3) de la première orientation et/ou position dans la deuxième orientation et/ou position est commandé, par exemple initié et/ou arrêté, sur la base du temps, en particulier du temps de traitement.

8. Méthode de l'une des revendications 2 à 7, dans laquelle on utilise un outil de moulage (3) qui comprend une première partie d'outil de moulage (3.1) et au moins une deuxième partie d'outil de moulage (3.2), dans laquelle l'au moins un élément d'outil mobile (3.3) est au moins partiellement mobile à l'intérieur d'au moins une des premières parties d'outil de moulage (3.1) et d'au moins une deuxième partie d'outil de moulage (3.2).

9. Méthode de l'une des revendications 2 à 8, dans laquelle l'au moins un élément d'outil mobile (3.3) comprend au moins un contour de façonnage (3.3.1), particulièrement incurvé ou incliné, pour façonner l'au moins une partie de charnière (1.1).

10. Méthode de l'une des revendications 2 à 9, dans laquelle l'au moins un élément mobile de l'outil (3.3) comprend une structure de trempe configurée pour tremper, par exemple chauffer et/ou refroidir, l'au moins un élément mobile de l'outil et/ou au moins une partie du matériel polymère expansible ou expansé à l'intérieur de la cavité (2) de l'outil de moulage (3).

11. Méthode de l'une quelconque des revendications précédentes, dans laquelle on utilise un outil de moulage (3) qui comprend une première partie d'outil de moulage (3.1) et au moins une deuxième partie d'outil de moulage (3.2), dans laquelle au moins une des premières parties d'outil de moulage (3.1) et au moins une deuxième partie d'outil de moulage (3.2) comprend au moins un contour de façonnage (3.1.6, 3.2.6), particulièrement incurvé ou incliné, pour façonner la au moins une partie de charnière (1.1).

12. Méthode de la revendication 11, dans laquelle l'au moins un contour de mise en forme est pourvu d'un insert de mise en forme (3.4) insérable dans une partie de réception d'insert de la première partie de l'outil de moulage (3.1) ou de l'au moins une deuxième partie de l'outil de moulage (3.2).

13. Méthode de l'une quelconque des revendications précédentes, dans laquelle l'exécution d'au moins une mesure pour fusionner le matériel polymère expansible ou expansé comprend l'introduction d'au moins un fluide de traitement, en particulier un fluide de traitement chauffé, plus particulièrement de la vapeur chauffée, dans la cavité (2) de l'outil de moulage (3).

14. Méthode de l'une quelconque des revendications précédentes, dans laquelle le matériel polymère expansible ou expansé est un matériel à base de polyester, de polyoléfine, de polyamide ou de polyuréthane.
